# EUROPÄISCHE PATENTSCHRIFT

(11) **EP 2 814 706 B1**
(45) Veröffentlichungstag und Bekanntmachung des Hinweises auf die Patenterteilung: **25.12.2019**
(21) Anmeldenummer: 13703396.5
(22) Anmeldetag: 07.02.2013
(51) Int. Cl.: B60T 8/1755

(54) **VERFAHREN ZUR ANSTEUERUNG EINES BREMSSYSTEMS, BREMSSYSTEM UND DESSEN VERWENDUNG IN EINEM KRAFTFAHRZEUG**
METHOD FOR CONTROLLING A BRAKE SYSTEM, BRAKE SYSTEM, AND ITS USE IN A MOTOR VEHICLE
PROCÉDÉ DE COMMANDE D'UN SYSTÈME DE FREINAGE, SYSTÈME DE FREINAGE ET SON UTILISATION DANS UN VÉHICULE AUTOMOBILE

(30) Priorität: 17.02.2012 DE 102012202467
(43) Veröffentlichungstag der Anmeldung: 24.12.2014
(73) Patentinhaber: Continental Teves AG & Co. OHG, 60488 Frankfurt am Main (DE); Volkswagen AG, 38436 Wolfsburg (DE)
(72) Erfinder: ZIMMERMANN, Tim, 61479 Glashütten (DE); BAUER, Thomas, 60489 Frankfurt am Main (DE); MAUS, Dieter, 31249 Hohenhameln (DE)
(86) Internationale Anmeldenummer: PCT/EP2013/052477
(87) Internationale Veröffentlichungsnummer: WO 2013/120766

(56) Entgegenhaltungen:
- EP-A2- 0 982 207
- EP-A2- 2 145 798
- WO-A1-2008/055512
- DE-A1- 19 622 754
- DE-A1-102008 041 498
- DE-A1-102009 046 339

## Beschreibung

Die Erfindung betrifft ein Verfahren gemäß Oberbegriff von Anspruch 1, ein Bremssystem gemäß Oberbegriff von Anspruch 9 und dessen Verwendung.

Moderne Fahrzeuge sind in der Regel mit elektronisch geregelten Bremssystemen ausgestattet, welche Funktionen wie eine Bremsschlupfregelung (ABS), die das Blockieren der Räder während einer Bremsung verhindert, und eine Fahrdynamikregelung (ESC) bereitstellen, die beispielsweise in der EP 0792 229 B1 beschrieben wird. Wird eine instabile Fahrsituation erkannt, so erfolgt ein aktiver Bremseingriff, wobei also durch die Fahrdynamikregelung ein fahrerunabhängiger Aufbau von Bremsmoment an einem oder mehreren Rädern angefordert und durch das Bremssystem umgesetzt wird, der durch ein gezielt eingebrachtes Giermoment das Fahrzeug stabilisiert.

Weiterhin besitzen Kraftfahrzeuge in zunehmendem Maße Umfeldsensoren, womit andere Verkehrsteilnehmer und unbewegliche Hindernisse erfasst und deren Positionen bzw. Geschwindigkeiten gegenüber dem eigenen Fahrzeug bestimmt werden können. Die Vernetzung dieser Umfeldsensorik mit einem elektronisch geregelten Bremssystem ermöglicht eine Abstandsregelung zum vorausfahrenden Kraftfahrzeug (ACC), eine Warnung des Fahrers beim Auftreten besonders kritischer Situationen, und eine automatische Einleitung einer Notbremsung, wenn eine Kollision droht. Um Fehleingriffe zu vermeiden, darf ein solcher Notbremsassistent (EBA) erst spät, d.h. in möglichst geringem Abstand zum Hindernis eingreifen.

Wenn eine Bremsanforderung aufgrund einer sicherheitskritischen Fahrsituation erfolgt, so muss das elektronische Bremssystem diese möglichst schnell in einen Aufbau von Bremsmoment umsetzen. Dies kann bei hydraulischen Bremssystemen dadurch erzielt werden, dass eine Pumpe Druck in einem oder mehreren Radbremszylindern aufbaut.

Aus der DE 199 17 904 C2 ist ein Verfahren zur Ansteuerung einer Pumpe zur Hilfsdruckversorgung einer Fahrzeugbremsanlage bekannt, in dem die Pumpe in einer ersten Phase voll bestromt wird und in einer zweiten Phase in einem Taktbetrieb bzw. gepulst betrieben wird. Wenn eine Bedingung zur Erkennung einer anstehenden erhöhten Beanspruchung erfüllt ist, so wird der Taktbetrieb für eine vorgebbare Zeit unterbunden, d.h. die Pumpe voll bestromt.

Die DE 10 2009 038 805 A1 offenbart ein elektronisches Kraftfahrzeugsteuergerät mit einem Hochsetzsteller (DC/DC-Wandler). Wenn eine Funktionsanforderung mit einem hohen Leistungsbedarf eingeht, wird der DC/DC-Wandler in einen aktiven Betriebszustand gesteuert, in dem die Versorgungsspannung für die angesteuerte Last gegenüber der Bordspannung erhöht wird. Somit kann die Funktion des Aktuators auch bei niedriger Bordnetzspannung gewährleistet werden. Das Kraftfahrzeugsteuergerät wird durch die benötigten zusätzlichen Bauteile aufwändiger zu fertigen.

Ferner ist aus der DE 10 2009 046 339 A1 ein Verfahren zur Durchführung eines Notbremsvorgangs in einem Fahrzeug bekannt, bei dem im Falle einer Notsituation mindestens ein elektrisches Stellglied in einem Bremssystem im Fahrzeug zur Erzeugung einer erhöhten Bremskraft selbsttätig betätigt wird, wobei das elektrische Stellglied mit einer Maximalspannung beaufschlagt wird, die die Bemessungsspannung des Stellglieds übersteigt.

Die Aufgabe der vorliegenden Erfindung besteht darin, mit möglichst geringem Aufwand einen schnellen Aufbau von Bremsmoment zu ermöglichen.

Diese Aufgabe wird durch ein Verfahren gemäß Anspruch 1 bzw. ein Bremssystem gemäß Anspruch 11 gelöst.

Es wird also ein Verfahren bereitgestellt, bei dem mindestens ein elektrisch betriebener Aktuator eines Fahrzeugbremssystems in Abhängigkeit von einer Bremsanforderung eines Fahrzeugregelsystems angesteuert wird, wodurch ein fahrerunabhängiger Aufbau von Bremsmoment an einem oder mehreren Fahrzeugrädern erfolgt. Dabei wird eine Versorgungsspannung des Fahrzeugbordnetzes angehoben, die an dem oder den elektrisch betriebenen Aktuator/en anliegt, wenn mindestens eine vorgegebene Bedingung erfüllt ist. Erfindungsgemäß ist dabei vorgesehen, dass die Versorgungsspannung wieder auf den ursprünglichen Wert zurückgesetzt wird, sobald keine der vorgegebenen Bedingungen mehr erfüllt ist oder ein Stillstand des Fahrzeugs erkannt wird, und die Versorgungsspannung erst dann wieder auf den ursprünglichen Wert zurückgesetzt wird, nachdem für eine vorgegebene Zeitspanne keine Bremsanforderung eines Fahrzeugregelsystems eingegangen ist.

Mit ursprünglicher Spannung ist hierbei eine Spannung in einem Intervall gemeint, welches unter energetischer und funktionaler Sicht für den Betrieb des Fahrzeugs geeignet ist und insbesondere die Spannung, welche vor Erfüllung einer der vorgegebenen Bedingungen herrschte.

Eine Überprüfung von Bedingungen lässt sich in einem üblichen Steuergerät, welches mindestens einen Mikroprozessor aufweist, mit geringem Software-Aufwand ohne Hardware-Änderung umsetzen.

Anders als beim Stand der Technik wird nicht nur die grundsätzliche Funktion eines Aktuators weiterhin gewährleistet, sondern die Geschwindigkeit des Bremsmomentaufbaus erhöht. Ein hydraulisch unverändertes Bremssystem weist somit gegenüber dem Stand der Technik eine erhöhte Druckaufbaudynamik auf. Somit wird die Fahrsicherheit erhöht.

Alternativ könnte die Pumpe eines hydraulischen Bremssystems bei unveränderter Druckaufbaudynamik gegenüber einem herkömmlichen Bremssystem verkleinert werden, womit eine Kostenersparnis bei gleicher Fahrsicherheit möglich ist.

Vorzugsweise ist eine erste vorgegebene Bedingung erfüllt, wenn eine Bremsanforderung von einem sicherheitskritischen Fahrzeugregelsystem erfolgt, insbesondere einer Fahrdynamikregelung oder einem Notbremsassistenten. Vielfach findet in elektronisch geregelten Bremssystemen bereits eine Arbitrierung der Bremsanforderungen verschiedener Fahrzeugregelsysteme statt. Zweckmäßigerweise wird hierbei eine Hierarchie der Fahrzeugregelsystems festgelegt, gemäß der z.B. die Anforderung eines Notbremsassistenten unabhängig davon umgesetzt wird, welche weiteren Fahrzeugregelsysteme ebenfalls aktiv sind. Auch eine Fahrdynamikregelung ist für die Fahrsicherheit entscheidend und könnte daher gegenüber allen Fahrzeugregelsystemen mit Ausnahme des Notbremsassistenten priorisiert werden. Hierbei sind mit Fahrzeugregelsystemen nicht nur Regelungen im eigentlichen Sinne gemeint, vielmehr soll dieser Begriff auch Fahrerassistenzfunktionen umfassen, die fahrerunabhängig einen Bremseingriff anfordern (wie z.B. ein Berganfahrassistent). Eine derartige Priorisierung sicherheitskritischer Fahrzeugregelfunktionen bzw. eine vorgegebene Hierarchie ist einfach in einem Steuergerät umzusetzen und schnell zu überprüfen.

Zweckmäßigerweise ist eine zweite vorgegebene Bedingung erfüllt, wenn eine die Fahrzeuginstabilität kennzeichnende Größe, insbesondere eine Abweichung zwischen gemessener Ist-Gierrate des Fahrzeugs und anhand eines Fahrzeugmodells berechneter Soll-Gierrate einen vorgegebenen Gierratendifferenzschwellenwert überschreitet. Da moderne Fahrzeuge vielfach mit einer Giermomentenregelung ausgestattet sind, ist ein Gierratensensor ohne Zusatzkosten verfügbar. Die Gierratendifferenz zwischen Soll- und Ist-Gierrate stellt ein geeignetes Maß für die Fahrstabilität zur Verfügung. Wird ein gegenüber der Eingriffsschwelle einer Giermomentenregelung niedrigerer Schwellenwert gewählt, so kann rechtzeitig die Versorgungsspannung angehoben werden; daher steht bei Aktivierung einer Giermomentenregelung bereits die optimale Dynamik beim Druck- bzw. Bremsmomentenaufbau zur Verfügung.

Bevorzugt ist eine dritte vorgegebene Bedingung erfüllt, wenn die Bremsanforderung einen vorgegebenen Anforderungsschwellenwert überschreitet, wobei insbesondere die Druckanforderung eines Fahrzeugregelsystems oder der Druck in einem Bremskreis des Bremssystems als Maß für die Bremsanforderung betrachtet werden. In unkritischen Fahrsituationen ist davon auszugehen, dass ein Fahrer und auch ein nicht sicherheitskritisches Fahrzeugregelsystem einen geringen Aufbau von Bremsmoment anfordern, da dies nur mit einem geringen Verlust von Fahrkomfort verbunden ist.

Es ist vorteilhaft, wenn die Anhebung der Versorgungsspannung des Bordnetzes über eine Spannungsanforderung bei einer Managementeinheit für das Bordnetz erfolgt. Eine Managementeinheit für das Bordnetz kann hierbei als ein eigenständiges Steuergerät oder als Erweiterung eines anderen Steuergeräts, wie z.B. einem Motorsteuergerät, realisiert sein. Dadurch, dass eine ohnehin vorhandene Managementeinheit verwendet wird, ist das erfindungsgemäße Verfahren umsetzbar, ohne dass aufwändige Änderungen am Bremssystem erfolgen müssen.

Bevorzugt wird die Versorgungsspannung des Fahrzeugbordnetzes auf einen vorgegebenen Wert oder einen in einem vorgegebenen Intervall liegenden Wert angehoben.

Besonders bevorzugt wird der vorgegebene Wert oder das vorgegebene Intervall in Abhängigkeit davon gewählt, welche oder wie viele von mehreren vorgegebenen Bedingungen erfüllt ist/sind. Indem die Anhebung der Versorgungsspannung nach Maßgabe der Gefährlichkeit der Fahrsituation erfolgt, kann immer ein geeigneter Kompromiss zwischen Energieverbrauch und Dynamik des Bremsmomentaufbaus gewählt werden.

Gemäß einer bevorzugten Ausführungsform der Erfindung wird die Versorgungsspannung des Fahrzeugbordnetzes auf den maximal zulässigen Wert angehoben wird. Somit wird die optimale Dynamik des Bremsmomentaufbaus gewährleistet.

Die Erfindung betrifft weiterhin ein Bremssystem für ein Fahrzeug, mit mindestens einem elektrisch betriebenen Aktuator, der einen fahrerunabhängiger Aufbau von Bremsmoment an einem oder mehreren Fahrzeugrädern ermöglicht. Erfindungsgemäß weist das Bremssystem ein Steuergerät auf, welches mindestens einen elektrisch betriebenen Aktuator mit einem Verfahren nach einem der Ansprüche 1 bis 10 ansteuert und über einen Fahrzeugdatenbus oder eine oder mehrere Steuerleitungen mit einer Managementeinheit für das Bordnetz verbunden ist.

Gemäß einer bevorzugten Ausführungsform der Erfindung ist mindestens einer der elektrisch betriebenen Aktuatoren eine Druckmittelpumpe, insbesondere eine Kolbenpumpe.

Gemäß einer weiteren bevorzugten Ausführungsform der Erfindung ist mindestens einer der elektrisch betriebene Aktuatoren eine elektromechanisch betriebene Reibbremse. Hierbei können auch die Räder einer Achse mit einem hydraulischen Bremssystem ausgerüstet sein, während eine zweite Achse mit elektromechanischen Reibbremsen versehen ist.

Zweckmäßigerweise ist das Steuergerät über einen Fahrzeugdatenbus oder eine oder mehrere Steuerleitungen mit einem oder mehreren Umfeldsensoren und/oder einem Kontrollrechner zur Auswertung von Umfeldsensorik verbunden.

Die Erfindung betrifft außerdem die Verwendung eines erfindungsgemäßen Bremssystems in einem Kraftfahrzeug, welches durch einen Verbrennungsmotor und/oder mindestens einen Elektromotor angetrieben wird.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein beispielhaftes Kraftfahrzeug,
- Fig. 2: eine schematische Darstellung eines Systems zur Durchführung des erfindungsgemäßen Verfahrens, und
- Fig. 3: den zeitlichen Ablauf einer Bremsung.

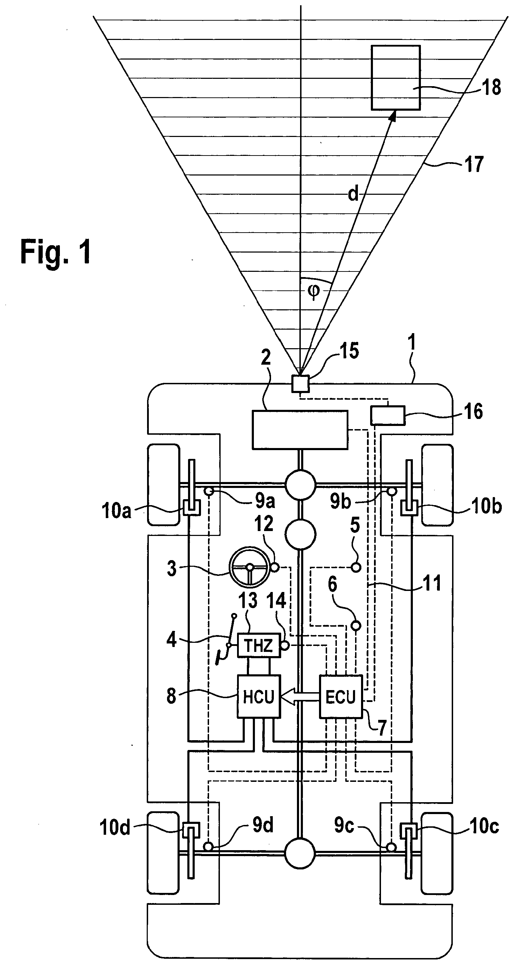

Figur 1 zeigt eine schematische Darstellung eines Kraftfahrzeugs 1, welches zur Durchführung des erfindungsgemäßen Verfahrens geeignet ist. Es weist einen Antriebsmotor 2, der zumindest einen Teil der Räder des Fahrzeugs antreibt, ein Lenkrad 3, ein Bremspedal 4, welches mit einem Tandemhauptzylinder (THZ) 13 verbunden ist, und vier individuell ansteuerbare Radbremsen 10a-10d auf. Das erfindungsgemäße Verfahren ist auch durchführbar, wenn nur ein Teil der Fahrzeugräder angetrieben wird. Wenn das Fahrzeug ein hydraulisches Bremssystem aufweist, so werden je zwei Radbremsen mit entsprechenden Hydraulikleitungen zu einem Bremskreis zusammengefasst. Neben oder alternativ zu hydraulischen Reibbremsen können auch an einem, mehreren oder allen Rädern elektromechanisch betätigte Reibbremsen als Radbremsen eingesetzt werden. Da die erreichbare Drehzahl und/oder das erreichbare Drehmoment eines Elektromotors von der Versorgungsspannung abhängen, ist das erfindungsgemäße Verfahren auch für elektromechanisch betätigte Reibbremsen einsetzbar. Die nachfolgende Beschreibung geht beispielhaft von einem hydraulischen Bremssystem aus.

Für die Erfassung von fahrdynamischen Zuständen sind ein Lenkradwinkelsensor 12 zur Messung des Lenkwinkels δ, vier Raddrehzahlsensoren 9a - 9d zur Messung der Drehgeschwindigkeiten vᵢ der einzelnen Räder, ein Querbeschleunigungssensor 5 zur Messung der Querbeschleunigung a_{Lat}, ein Gierratensensor 6 zur Messung.der auch als Gierrate bezeichneten Gierwinkelgeschwindigkeit Ψ̇ und mindestens ein Drucksensor 14 für die Messung des von Bremspedal und THZ erzeugten Bremsdrucks p vorhanden. Dabei kann der Drucksensor 14 auch durch einen Pedalweg- oder Pedalkraftsensor ersetzt sein, falls der Zusammenhang zwischen Pedalstellung und Bremsmoment konstant bzw. bekannt ist. Ein Pedalwegsensor kann auch dann eingesetzt werden, wenn die Räder einer oder mehrerer Achsen zumindest zeitweise mit einem Generator verbunden werden können, um eine Rückgewinnung elektrischer Energie beim Bremsen zu ermöglichen. Die Signale der Radsensoren werden einem elektronischen Steuergerät (ECU) 7 zugeführt, das anhand vorgegebener Kriterien aus den Raddrehgeschwindigkeiten vᵢ die Fahrzeuggeschwindigkeit v_{Ref} ermittelt.

Die ECU 7 empfängt die Informationen der oben beschriebenen wie auch eventuell vorhandener weiterer Sensoren und steuert die Hydraulikeinheit (HCU) 8, um fahrerunabhängig einen Aufbau oder eine Modulation des Bremsdrucks in den einzelnen Radbremsen zu ermöglichen. Die Hydraulikeinheit umfasst eine Pumpe pro Bremskreis und mehrere Magnetventile, wobei insbesondere jede Radbremse ein Einlass- und ein Auslassventil aufweist. Zweckmäßigerweise sind Magnetventile zum gezielten Trennen des Hauptzylinders von den Radbremsen und Verbinden des Hauptzylinders mit der Saugseite der Pumpe und vorzugsweise einem Niederdruckspeicher. Dies ermöglicht es, mit einer Aktivierung der Pumpe einen fahrerunabhängigen Aufbau von Bremsmoment zu bewirken. Das Bremssystem weist vorzugsweise einen Drucksensor an mindestens einer Radbremse auf, besonders bevorzugt an je einer Radbremse jedes Bremskreises. Zusätzlich werden das aktuell von Antriebsmotor 2 erzeugte Antriebsmoment und das vom Fahrer gewünschte Antriebsmoment bestimmt. Dabei kann es sich auch um indirekt ermittelte Größen handeln, die beispielsweise aus einem Motorkennfeld abgeleitet werden und der ECU 7 über eine Schnittstelle 11, z.B. einen CAN- oder FlexRay-Bus vom nicht gezeigten Motorsteuergerät übertragen werden.

Das Fahrverhalten des Kraftfahrzeugs 1 wird wesentlich durch die Fahrwerksauslegung beeinflusst, wobei unter anderem Radlastverteilung, Elastizität der Radaufhängungen und Reifeneigenschaften das Eigenlenkverhalten bestimmen. In bestimmten Fahrsituationen, welche durch einen vorgegebenen, gewünschten Kurvenradius und den Reibwerten zwischen Reifen und Fahrbahn gekennzeichnet sind, kann es zu einem Verlust der Fahrstabilität kommen, wobei das vom Fahrer gewünschte Lenkverhalten nicht erreicht werden kann. Mit den vorhandenen Sensoren kann der Fahrerwunsch erkannt und die Realisierung durch das Fahrzeug überprüft werden. Vorzugsweise wird bereits die Tendenz zu einem Verlust der Stabilität detektiert.

Die ECU 7 führt häufig mehrere Verfahren zur Regelung der Fahrstabilität aus, wobei eine Arbitrierung gegebenenfalls simultan eintreffender Bremsanforderungen stattfindet. So erfolgt vielfach eine Gierratenregelung, welche die gemessene Ist-Gierrate mit einer Modellgierrate vergleicht. Liegt diese Differenz über der Regeleintrittsschwelle beginnt der Bremseneingriff. Die Modellgierrate entspricht der Soll-Gierrate und wird durch ein einfaches Fahrzeugmodell über den Lenkwinkel und die Fahrzeuggeschwindigkeit gebildet. Daneben findet häufig eine Regelung der Schwimmwinkelgeschwindigkeit statt. Diese Größe wird auch über das Fahrzeugmodell gebildet und entspricht in Übersteuersituationen der Geschwindigkeit mit der das Fahrzeug eindreht bzw. das Fahrzeugheck ausschert. Sobald eine gewisse Schwelle für die Schwimmwinkelgeschwindigkeit überschritten ist, beginnt der Bremseneingriff. Am weitesten verbreitet ist eine Bremsschlupfregelung, welche ein Blockieren der Räder während eines Bremsvorgangs verhindert.

Weiterhin weist das Fahrzeug 1 eine Umfeldsensorik mit zumindest einem Umfeldsensor 15 auf, mit dem Objekte im Umfeld des Fahrzeugs erfasst werden können, bei denen es sich insbesondere um weitere Kraftfahrzeuge handelt, die sich in derselben oder einer benachbarten Fahrspur seitlich und/oder vor dem Fahrzeug 1 bewegen. Als Objekte kommen aber auch statische oder nahezu statische Objekte wie beispielsweise Bäume, Fußgänger oder Fahrbahnbegrenzungen in Frage. Beispielhaft wird ein Umfeldsensor 15 mit einem Erfassungsbereich 17 gezeigt, der ·einen Raumwinkel vor dem Fahrzeug 1 umfasst, in dem ein Objekt 18 dargestellt ist. Die Signale des Umfeldsensors 15 werden von einem Kontrollrechner 16 ausgewertet und entsprechende Informationen der ECU 7 zur Verfügung gestellt. Prinzipiell kann Kontrollrechner 16 aber auch in dem Umfeldsensor 15 integriert sein, und/oder die ECU 7 kann die Sensorsignale direkt verarbeiten.

Bei dem Umfeldsensor 15 handelt sich z.B. um einen an sich bekannten LIDAR-Sensor (Light Detection and Ranging) der die Abstände d zu den erfassten Punkten eines Objekts sowie die Winkel *ϕ* zwischen den Verbindungsgeraden zu diesen Punkten und der Mittellängsachse des Fahrzeugs misst, wie dies in Fig. 1 beispielhaft für einen Punkt des Objekts 18 veranschaulicht ist. Hieraus wird ein Bezugspunkt für das Objekt 18 bestimmt und direkt oder indirekt die Geschwindigkeit der erfassten Objekte ermittelt. Wenn die Umfeldsensorik einen Radarsensor umfasst, kann die Geschwindigkeit mittels des Dopplereffekts direkt gemessen werden. Prinzipiell können auch eine oder mehrere Kameras bzw. andere Umfeldsensoren eingesetzt werden.

Das beispielhaft beschriebene Fahrzeug kann also mit der Umfeldsensorik eine bevorstehende Kollision erkennen und eine Notbremsung einleiten, bei dem vorzugsweise die Pumpe der HCU einen so hohen Bremsdruck in den Radbremsen aufbaut, dass die Bremsschlupfregelung eingreift. Dies hat den Vorteil, dass der vorhandene Reibwert zwischen Reifen und Fahrbahnoberfläche optimal genutzt wird und ein kurzer Bremsweg erzielt wird. Der Volumenstrom der verwendeten Pumpe begrenzt die erreichbare Druckaufbaudynamik und beeinflusst somit den erreichbaren Bremsweg, da dieser umso kürzer wird, je früher die optimale Reibwertnutzung erreicht ist.

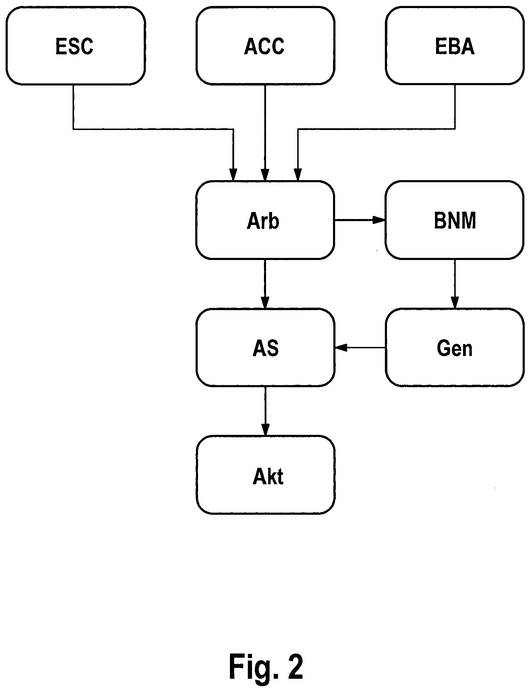

Figur 2 zeigt eine schematische Darstellung eines Systems zur Durchführung des erfindungsgemäßen Verfahrens. Hierbei bezeichnet ESC eine Fahrdynamikregelung, ACC eine Abstandsregelung, EBA einen Notbremsassistenten. Diese Fahrzeugregelungen senden bei Erfüllung ihrer jeweiligen Aktivierungsbedingungen eine Bremsanforderung an eine Arbitrierungseinheit Arb aus, die anhand vorgegebener Kriterien ermittelt, welche Bremsanforderung durch das Bremssystem umgesetzt werden soll. Daraufhin erfolgt die Aktivierung der Ansteuerschaltung AS, die den Aktuator Akt ansteuert und mit Strom versorgt.

In dem gezeigten Ausführungsbeispiel überprüft die Arbitrierungseinheit Arb eine oder mehrere vorgegebene Bedingungen und sendet eine Anforderung an eine Managementeinheit für das Bordnetz BNM, sobald mindestens eine davon erfüllt ist. Daraufhin aktiviert die BNM den Generator Gen oder betreibt ihn gegebenenfalls mit höherer Leistung.

Eine oder mehrere der Fahrzeugregelungen, insbesondere die Fahrdynamikregelung ESC, sind in der ECU 7 eines Fahrzeugbremssystems realisiert. Manche Fahrzeugregelungen können aber von einem speziellen Steuergerät bereitgestellt werden, wie z.B. Kontrollrechner 16, der eine Abstandsregelung ACC und/oder einen Notbremsassistenten EBA durchführt.

Vorzugsweise überprüft die Arbitrierungseinheit als eine erste vorgegebene Bedingung, ob eine Bremsanforderung von einem Notbremsassistenten eingegangen ist.

Gemäß einer bevorzugten Ausführungsform der Erfindung wird alternativ oder zusätzlich als zweite vorgegebene Bedingung überprüft, ob eine die Fahrzeuginstabilität kennzeichnende Größe, insbesondere eine Abweichung zwischen gemessener Ist-Gierrate des Fahrzeugs und anhand eines Fahrzeugmodells berechneter Soll-Gierrate einen vorgegebenen Gierratendifferenzschwellenwert überschreitet. Als eine die Fahrzeuginstabilität kennzeichnende Größe kann aber auch der Schlupf eines oder mehrerer Räder und/oder die Schlupfdifferenz zwischen verschiedenen Rädern betrachtet werden.

Gemäß einer weiteren bevorzugten Ausführungsform der Erfindung wird alternativ oder zusätzlich als dritte vorgegebene Bedingung überprüft, ob die Bremsanforderung einen vorgegebenen Anforderungsschwellenwert überschreitet. Hierbei wird insbesondere die Druckanforderung eines Fahrzeugregelsystems mit einem Anforderungsschwellenwert verglichen. Aber auch der Druck in einem Bremskreis des Bremssystems kann als Maß für die Bremsanforderung betrachtet werden, wenn z.B. an einer oder mehreren Radbremsen ein Drucksensor angebracht ist. Alternativ oder ergänzend kann auch die Längsverzögerung mit einem Anforderungsschwellenwert verglichen werden.

Es ist zweckmäßig, wenn die Bedingung/en zur Auslösung einer Bordnetzerhöhung von einem oder mehreren getrennten Steuergerät/en überprüft werden.

Gemäß einer bevorzugten Ausführungsform der Erfindung erfolgt die Überprüfung der Bedingungen alternativ oder zusätzlich durch die ECU 7 bzw. eine in der ECU 7 bereitgestellte Funktion, insbesondere die Arbitrierungseinheit oder einen Druckregler für eine oder mehrere Radbremsen.

Das erfindungsgemäße Verfahren ist auch ohne Umfeldsensorik durchführbar. So kann z.B. ein Notbremsassistent dadurch realisiert werden, dass der Bremsdruck p im THZ überwacht wird, und ein Druckaufbau erfolgt, wenn die Betätigungsgeschwindigkeit durch den Fahrer bzw. die zeitliche Änderung dp/dt des THZ-Drucks einen vorgegebenen Grenzwert übersteigt. Auch in diesem Fall kann durch eine Bordnetzanhebung ein kürzerer Bremsweg und damit eine erhöhte Fahrsicherheit erreich werden.

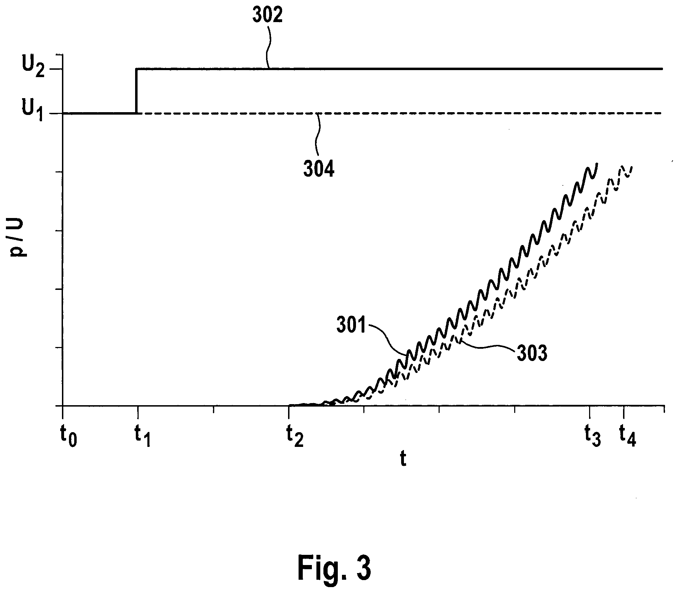

Figur 3 zeigt den zeitlichen Ablauf einer Bremsung, bei welcher der Bremsmomentaufbau durch ein Fahrzeugregelsystem angefordert und durch Aktivierung einer Hydraulikpumpe umgesetzt wird. Auf der Ordinate sind der Druck p in einem Bremskreis bzw. einer Radbremse des Bremssystems und die Spannung U des Bordnetzes dargestellt, wobei Linie 301 den Druckverlauf und Linie 302 die Bordnetzspannung nach dem erfindungsgemäßen Verfahren zeigen.

Ursprünglich liegt beispielsweise eine Spannung U₁ am Bordnetz an, die auch unter dem Gesichtspunkt des Energiesparens sinnvoll (also möglichst niedrig) ist.

Zum Zeitpunkt t₀ ist eine vorgegebene Bedingung erfüllt, woraufhin eine Erhöhung der Bordnetzspannung angefordert wird. Beispielsweise kann die Umfeldsensorik feststellen, dass der Abstand zu einem Hindernis einen Warnschwellenwert des Notbremsassistenten unterschreitet.

Daraufhin wird der Generator bzw. die Lichtmaschine aktiviert und zum Zeitpunkt t₁ ist die Bordnetzspannung auf den maximal zulässigen Wert U₂ erhöht.

Zum Zeitpunkt t₂ unterschreitet der Abstand zu einem Hindernis den Eingriffsschwellenwert des Notbremsassistenten, woraufhin eine Bremsanforderung an den Druckregler gesendet wird und eine Aktivierung der Hydraulikpumpe erfolgt. Diese wird zweckmäßigerweise voll angesteuert und nicht getaktet betrieben, um die höchste mögliche Druckaufbaudynamik zu erreichen. Linie 301 stellt den Druckverlauf in einem Bremskreis dar, der Druckverlauf in dem zweiten Bremskreis ist entsprechend.

Der aufgebaute Druck zum Zeitpunkt t₃ ist so hoch, dass die Bremsschlupfregelung eingreift. Somit wird der vorhandene Reibwert optimal genutzt, und ein weiterer Druckaufbau ist nicht mehr erforderlich.

Wenn das Fahrzeug zum Stillstand gekommen ist und/oder keine der vorgegebenen Bedingungen zur Bordnetzanhebung mehr erfüllt ist, kann die Spannung des Bordnetzes wieder auf den ursprünglichen Wert abgesenkt werden (nicht gezeigt).

Linie 303 zeigt den Druckverlauf und Linie 304 die Bordnetzspannung nach dem Stand der Technik.

Bis zum Zeitpunkt t₂, an dem der Abstand zu einem Hindernis den Eingriffsschwellenwert des Notbremsassistenten unterschreitet, findet keine Aktivität statt. Die Bordnetzspannung bleibt während der gesamten Zeit auf dem konstanten Wert U₁.

Ab dem Zeitpunkt t₂ erfolgt der Druckaufbau gemäß Linie 303. Da der Pumpenmotor mit einer geringeren Spannung läuft, verzögert sich der Druckaufbau gegenüber Linie 301.

Dadurch, dass die maximal mögliche Bremswirkung nach dem erfindungsgemäßen Verfahren früher erzielt wird, verringert sich der Bremsweg deutlich und die Fahrsicherheit wird erhöht.

## Patentansprüche

1. Verfahren, bei dem mindestens ein elektrisch betriebener Aktuator eines Fahrzeugbremssystems in Abhängigkeit von einer Bremsanforderung eines Fahrzeugregelsystems angesteuert wird, wodurch ein fahrerunabhängiger Aufbau von Bremsmoment an einem oder mehreren Fahrzeugrädern erfolgt, wobei eine Versorgungsspannung des Fahrzeugbordnetzes angehoben wird, die an dem oder den elektrisch betriebenen Aktuator/en anliegt, wenn mindestens eine vorgegebene Bedingung erfüllt ist, **dadurch gekennzeichnet, dass** die Versorgungsspannung wieder auf den ursprünglichen Wert zurückgesetzt wird, sobald keine der vorgegebenen Bedingungen mehr erfüllt ist oder ein Stillstand des Fahrzeugs erkannt wird, und die Versorgungsspannung erst dann wieder auf den ursprünglichen Wert zurückgesetzt wird, nachdem für eine vorgegebene Zeitspanne keine Bremsanforderung eines Fahrzeugregelsystems eingegangen ist.

2. Verfahren nach Anspruch 1, **dadurch gekennzeichnet, dass** eine erste vorgegebene Bedingung erfüllt ist, wenn eine Bremsanforderung von einem sicherheitskritischen Fahrzeugregelsystem erfolgt, insbesondere einer Fahrdynamikregelung oder einem Notbremsassistenten.

3. Verfahren nach Anspruch 1 oder 2, **dadurch gekennzeichnet, dass** eine zweite vorgegebene Bedingung erfüllt ist, wenn eine die Fahrzeuginstabilität kennzeichnende Größe, insbesondere eine Abweichung zwischen gemessener Ist-Gierrate des Fahrzeugs und anhand eines Fahrzeugmodells berechneter Soll-Gierrate einen vorgegebenen Gierratendifferenzschwellenwert überschreitet.

4. Verfahren nach mindestens einem der Ansprüche 1 bis 3, **dadurch gekennzeichnet, dass** eine dritte vorgegebene Bedingung erfüllt ist, wenn die Bremsanforderung einen vorgegebenen Anforderungsschwellenwert überschreitet, wobei insbesondere die Druckanforderung eines Fahrzeugregelsystems oder der Druck in einem Bremskreis des Bremssystems als Maß für die Bremsanforderung betrachtet werden.

5. Verfahren nach mindestens einem der Ansprüche 1 bis 4, **dadurch gekennzeichnet, dass** die Anhebung der Versorgungsspannung des Bordnetzes über eine Spannungsanforderung bei einer Managementeinheit für das Bordnetz erfolgt.

6. Verfahren nach mindestens einem der Ansprüche 1 bis 5, **dadurch gekennzeichnet, dass** die Versorgungsspannung des Fahrzeugbordnetzes auf einen vorgegebenen Wert oder einen in einem vorgegebenen Intervall liegenden Wert angehoben wird.

7. Verfahren nach Anspruch 6, **dadurch gekennzeichnet, dass** der vorgegebene Wert oder das vorgegebene Intervall in Abhängigkeit davon gewählt wird, welche oder wie viele von mehreren vorgegebenen Bedingungen erfüllt ist/sind.

8. Verfahren nach mindestens einem der Ansprüche 1 bis 7, **dadurch gekennzeichnet, dass** die Versorgungsspannung des Fahrzeugbordnetzes auf den maximal zulässigen Wert angehoben wird.

9. Bremssystem für ein Fahrzeug, mit mindestens einem elektrisch betriebenen Aktuator, der einen fahrerunabhängiger Aufbau von Bremsmoment an einem oder mehreren Fahrzeugrädern ermöglicht, **gekennzeichnet durch** ein Steuergerät (7), welches mindestens einen elektrisch betriebenen Aktuator mit einem Verfahren nach einem der Ansprüche 1 bis 8 ansteuert und über einen Fahrzeugdatenbus (11) oder eine oder mehrere Steuerleitungen mit einer Managementeinheit für das Bordnetz verbunden ist.

10. Bremssystem nach Anspruch 9, **dadurch gekennzeichnet, dass** mindestens einer der elektrisch betriebenen Aktuatoren eine Druckmittelpumpe ist, insbesondere eine Kolbenpumpe.

11. Bremssystem nach Anspruch 9 oder 10, **dadurch gekennzeichnet, dass** mindestens einer der elektrisch betriebene Aktuatoren eine elektromechanisch betriebene Reibbremse ist.

12. Bremssystem nach mindestens einem der Ansprüche 9 bis 11, **dadurch gekennzeichnet, dass** das Steuergerät (7) über einen Fahrzeugdatenbus (11) oder eine oder mehrere Steuerleitungen mit einem oder mehreren Umfeldsensoren (15) und/oder einem Kontrollrechner zur Auswertung von Umfeldsensorik (15) verbunden ist.

13. Verwendung eines Bremssystems nach mindestens einem der Ansprüche 9 bis 12 in einem Kraftfahrzeug (1), welches durch einen Verbrennungsmotor (2) und/oder mindestens einen Elektromotor angetrieben wird.

## Claims

1. Method, in the case of which at least one electrically operated actuator of a vehicle brake system is actuated in a manner which is dependent on a brake request of a vehicle control system, as a result of which a driver-independent build-up of torque takes place at one or more vehicle wheels, a supply voltage of the vehicle on-board electric system being raised, which supply voltage prevails at the electrically operated actuator or actuators, if at least one predefined condition is fulfilled, **characterized in that** the supply voltage is reset again to the original value as soon as none of the predefined conditions are fulfilled any longer or a standstill of the vehicle is detected, and the supply voltage is reset again to the original value only after no brake request of a vehicle control system has been input for a predefined time period.

2. Method according to Claim 1, **characterized in that** a first predefined condition is fulfilled if a brake request is effected by a safety-critical vehicle control system, in particular a vehicle dynamics control system or an emergency brake assistance system.

3. Method according to Claim 1 or 2, **characterized in that** a second predefined condition is fulfilled if a variable which characterizes the vehicle instability, in particular a deviation between a measured actual yaw rate of the vehicle and a setpoint yaw rate which is calculated on the basis of a vehicle model, exceeds a predefined yaw rate differential threshold value.

4. Method according to at least one of Claims 1 to 3, **characterized in that** a third predefined condition is fulfilled if the brake request exceeds a predefined request threshold value, the pressure request of a vehicle control system or the pressure in a brake circuit of the brake system, in particular, being considered to be a measure of the brake request.

5. Method according to at least one of Claims 1 to 4, **characterized in that** the raising of the supply voltage of the on-board electric system takes place via a voltage request in the case of a management unit for the on-board electric system.

6. Method according to at least one of Claims 1 to 5, **characterized in that** the supply voltage of the vehicle on-board electric system is raised to a predefined value or a value which lies at a predefined interval.

7. Method according to Claim 6, **characterized in that** the predefined value or the predefined interval is selected in a manner which is dependent on which or how many of several predefined conditions is/are fulfilled.

8. Method according to at least one of Claims 1 to 7, **characterized in that** the supply voltage of the vehicle on-board electric system is raised to the maximum permissible value.

9. Brake system for a vehicle, having at least one electrically operated actuator which makes a driver-independent build-up of brake torque at one or more vehicle wheels possible, **characterized by** a control unit (7) which actuates at least one electrically operated actuator by way of a method according to one of Claims 1 to 8 and is connected via a vehicle data bus (11) or one or more control lines to a management unit for the on-board electric system.

10. Brake system according to Claim 9, **characterized in that** at least one of the electrically operated actuators is a pressure medium pump, in particular a piston pump.

11. Brake system according to Claim 9 or 10, **characterized in that** at least one of the electrically operated actuators is an electromechanically operated friction brake.

12. Brake system according to at least one of Claims 9 to 11, **characterized in that** the control unit (7) is connected via a vehicle data bus (11) or one or more control lines to one or more environmental sensors (15) and/or a control computer for the evaluation of the environmental sensor system (15).

13. Use of a brake system according to at least one of Claims 9 to 12 in a motor vehicle (1) which is driven by way of an internal combustion engine (2) and/or at least one electric motor.

## Revendications

1. Procédé, selon lequel au moins un actionneur à fonctionnement électrique d'un système de freinage de véhicule est commandé en fonction d'une demande de freinage d'un système de régulation de véhicule, cela permettant d'établir un couple de freinage sur une ou plusieurs roues du véhicule indépendamment du conducteur, dans lequel une tension d'alimentation du système électrique du véhicule qui est appliquée au(x) actionneur(s) à commande électrique est augmentée lorsqu'au moins une condition prédéterminée est remplie, **caractérisé en ce que** la tension d'alimentation est réinitialisée à la valeur d'origine dès qu'aucune des conditions prédéterminées n'est plus remplie ou qu'un arrêt du véhicule est détecté, et la tension d'alimentation n'est rétablie à sa valeur d'origine qu'après qu'aucune demande de freinage d'un système de régulation de véhicule n'a été reçue pendant une période de temps prédéfinie.

2. Procédé selon la revendication 1, **caractérisé en ce qu'**une première condition prédéterminée est remplie lorsqu'une demande de freinage est délivrée par un système de commande de véhicule critique pour la sécurité, en particulier une régulation de dynamique du véhicule ou un assistant de freinage d'urgence.

3. Procédé selon la revendication 1 ou 2, **caractérisé en ce qu'**une deuxième condition prédéterminée est remplie lorsqu'une grandeur caractérisant l'instabilité du véhicule, en particulier un écart entre la vitesse de lacet réelle mesurée du véhicule et la vitesse de lacet de consigne calculée sur la base d'un modèle du véhicule dépasse une valeur de seuil de différence de vitesse de lacet prédéterminée.

4. Procédé selon au moins l'une des revendications 1 à 3, **caractérisé en ce qu'**une troisième condition prédéterminée est remplie lorsque la demande de freinage dépasse une valeur de seuil de demande prédéterminée, dans lequel, notamment la demande de pression d'un système de commande du véhicule ou la pression dans un circuit de freinage du système de freinage est considérée comme étant une mesure de la demande de freinage.

5. Procédé selon au moins l'une des revendications 1 à 4, **caractérisé en ce que** l'augmentation de la tension d'alimentation du réseau de bord est effectuée au moyen d'une demande de tension dans une unité de gestion du réseau de bord.

6. Procédé selon au moins l'une des revendications 1 à 5, **caractérisé en ce que** la tension d'alimentation du réseau de bord du véhicule est portée à une valeur prédéterminée ou à une valeur située dans un intervalle prédéterminé.

7. Procédé selon la revendication 6, **caractérisé en ce que** la valeur prédéterminée ou l'intervalle prédéterminé est sélectionné en fonction de la condition ou du nombre de conditions qui est/sont remplie(s) parmi une pluralité de conditions prédéterminées.

8. Procédé selon au moins l'une des revendications 1 à 7, **caractérisé en ce que** la tension d'alimentation du réseau de bord est portée à la valeur maximale admissible.

9. Système de freinage d'un véhicule, comportant au moins un actionneur à fonctionnement électrique qui permet d'établir un couple de freinage sur une ou plusieurs roues du véhicule indépendamment du conducteur, **caractérisé par** un appareil de commande (7) qui commande au moins un actionneur à fonctionnement électrique à l'aide d'un procédé selon l'une des revendications 1 à 8 et qui est relié par un bus de données de véhicule (11) ou une ou plusieurs lignes de commande à une unité de gestion du réseau de bord.

10. Système de freinage selon la revendication 9, **caractérisé en ce qu'**au moins l'un des actionneurs électriques est une pompe à fluide sous pression, en particulier une pompe à piston.

11. Système de freinage selon la revendication 9 ou 10, **caractérisé en ce qu'**au moins l'un des actionneurs électriques est un frein à friction à fonctionnement électromécanique.

12. Système de freinage selon au moins l'une des revendications 9 à 11, **caractérisé en ce que** l'unité de commande (7) est reliée par l'intermédiaire d'un bus de données de véhicule (11) ou d'une ou plusieurs lignes de commande à un ou plusieurs capteurs d'environnement (15) et/ou à un ordinateur de commande destiné à analyser des capteurs d'environnement (15).

13. Utilisation d'un système de freinage selon au moins une des revendications 9 à 12 dans un véhicule automobile (1) qui est entraîné par un moteur à combustion interne (2) et/ou au moins un moteur électrique.
